# EUROPÄISCHE PATENTANMELDUNG

(11) **EP 3 494 768 A1**
(43) Veröffentlichungstag der Anmeldung: **12.06.2019**
(21) Anmeldenummer: 18210416.6
(22) Anmeldetag: 05.12.2018
(51) Int. Cl.: A01B 79/00, A01B 61/04

(54) **VERFAHREN UND VORRICHTUNG ZUR KARTIERUNG EVENTUELL IN EINEM FELD VORHANDENER FREMDKÖRPER**

(30) Priorität: 11.12.2017 DE 102017222403
(71) Anmelder: Deere & Company, Moline, IL 61265 (US)
(72) Erfinder: Gresch, Valentin, 68163 Mannheim (DE); Laga, Robert, 68163 Mannheim (DE)
(74) Vertreter: Holst, Sönke

(57) **Zusammenfassung**

Ein Verfahren und eine Vorrichtung zur Kartierung eventuell in einem Feld vorhandener Fremdkörper umfasst folgende Schritte bzw. Mittel zu ihrer Durchführung:
Überfahren des Feldes mit einem Arbeitsgerät, das mindestens ein in den Boden des Feldes eindringendes und/oder auf dem Boden entlang laufendes Bodeneingriffsmittel umfasst,
Überwachen des Signals eines mit dem Bodeneingriffsmittel zusammenwirkenden Sensors (104) daraufhin, ob das Bodeneingriffsmittel mit einem im Feld liegenden Fremdkörper interagiert,
Bestimmen der Position eines erfassten Fremdkörpers unter Verwendung eines Positionserfassungssystems (106),
und Abspeichern der bestimmten Position des erfassten Fremdkörpers.

## Beschreibung

Die Erfindung betrifft ein Verfahren zur Kartierung eventuell in einem Feld vorhandener Fremdkörper und eine entsprechende Vorrichtung.

### Stand der Technik

Durch Bodenerosion und tiefe Bodenbearbeitung kommt es auf landwirtschaftlich genutzten Feldern mitunter vor, dass Hindernisse wie Steine an obere Bodenschichten transportiert werden. Diese führen zu Verschleiß von Werkzeugen an Bodenbearbeitungsgeräten und verhindern die gleichmäßige Bearbeitung des Bodens und der Aussaat.

Für eine großflächige Entfernung von Steinen in sehr steinigen Feldern werden im Stand der Technik spezielle Maschinen (sogenannte Steinsammler oder Steinbrecher) eingesetzt. Der Einsatz dieser Maschinen ist jedoch nur bei Feldern mit weitreichender "Verunreinigung" mit Steinen wirtschaftlich sinnvoll. Vielfach werden einzelne Steine deshalb manuell eingesammelt. Hindernisse wie Steine werden aus der Maschinenkabine auch oft nicht wahrgenommen, können aber dennoch beträchtlichen Verschleiß oder Schaden an den Werkzeugen bzw. der (Ernte- oder Bodenbearbeitungs-) Maschine verursachen. Sollten Steine während des laufenden Arbeitsvorgangs erkannt werden, muss der Maschinenführer die Beseitigung in andere Hände übergeben, da er die dafür nötige Ausrichtung oft nicht mitführt.

Das zeitaufwendige Warten auf Mitarbeiter ist ebenso wenig ratsam. Der Maschinenbediener muss sich die Stelle merken, an welcher der Stein liegt und an Mitarbeiter weiter kommunizieren. Das Merken von unzähligen Ereignissen ist dem Fahrer nicht zumutbar. Nach der Weitergabe des Ereignispunktes muss die zuständige Person oft anhand von Hinweisen (z.B. "es liegt ein großer Stein etwa 50 m links neben dem Strommast am hinteren östlichen Ende des Feldes") den Ort des Hindernisses ausfindig machen. Dies ist wiederum sehr zeitaufwändig, oft nicht zielführend und beschädigt den Boden durch mehrmaliges Überfahren mit schweren Maschinen, falls beispielsweise ein Traktor mit Frontlader zum Einsammeln der Steine verwendet wird. Um den Boden und die Saat zu schonen, werden nach dem Aussäen solche Vorgänge vermieden. Bis nach der Ernte ist der Punkt des Hindernisses oft vergessen. Des Weiteren können freiliegende Objekte nach der Aussaat auch oft überwachsen werden.

Die Gefahr, dass Erntemaschinen diese Objekte aufnehmen ist recht hoch. Ein Schaden durch unerwünschte Objekte kann zu Maschinenausfall mit langer Standzeit führen.

Ein System zur Erkennung von unerwünschten Objekten (Steine) im flachen Bodenhorizont könnte dazu beitragen, diese Objekte leichter zu erkennen, zu einem späteren Zeitpunkt zu lokalisieren und zu entfernen um den Verschleiß und das Schadensrisiko an Maschinen und Geräten zu minimieren und eine gleichmäßige Bodenbewirtschaftung zu ermöglichen.

Im Stand der Technik wurde vorgeschlagen, die Standorte eventueller Hindernisse oder Steine durch den Bediener während eines Arbeitsvorgangs auf dem Feld in eine elektronische Karte eintragen zu lassen (EP 1 659 366 A2), um die Steine später entfernen zu können, oder derartige Gegenstände selbsttätig zu erkennen und zu entfernen (EP 2 441 330 A2). Erntemaschinen mit Mitteln zur optischen Detektion eventueller Steine zwecks Anhebens des Erntevorsatzes oder Umfahrens zur Vermeidung einer Beschädigung der Erntemaschine sind ebenfalls beschrieben worden (DE 10 2015 118 767 A1, DE 10 2014 201 203 A1, DE 10 2007 053 577 A1, DE 10 2006 055 858 A1), wie auch eine Kartierung mittels einer Kamera eines Handgeräts optisch erfasster Steine zur späteren Entfernung vom Feld (EP 2 784 543 A2). Zudem wurde vorgeschlagen, die Position eventuell von einer Erntemaschine aufgefundener Fremdkörper zu kartieren, um diese später vom Feld entfernen zu können (EP 1 266 560 A1, EP 1 769 671 A1).

Bei Bodenbearbeitungs- und Sämaschinen hat man Maßnahmen vorgesehen, um im Bodeneingriff befindliche Elemente mechanisch gegen Beschädigungen durch Steine zu sichern (vgl. beispielsweise DE 43 39 443 A1), wozu die im Bodeneingriff befindlichen Elemente gegen Federkraft nach oben ausweichen können. Eine Sensierung geschweige denn Kartierung eventuell aufgefundener Steine ist jedoch nicht vorgesehen.

### Aufgabe

Nach alledem nutzt man zur Kartierung von einem Feld zu entfernender Steine oder anderer Fremdkörper im Stand der Technik den Bediener einer Landmaschine, eine Kamera oder einen Fremdkörpersensor einer Erntemaschine. Die Erkennung der Fremdkörper durch den Bediener oder eine Kamera leidet darunter, dass die Fremdkörper bei schlechtem Licht kaum erkennbar sind, zumal sie oft zum größten Teil oder vollständig unter der Erde liegen. Die Erkennung mit einem Fremdkörpersensor einer Erntemaschine hilft nur, wenn der Fremdkörper schon aufgenommen wurde.

Es wäre demnach wünschenswert, eine Möglichkeit bereitzustellen, auch im Boden befindliche Fremdkörper und insbesondere Steine zwecks einer späteren Entfernung kartieren zu können.

### Lösung

Dieses Problem wird erfindungsgemäß durch die Lehre der Patentansprüche 1 und 10 gelöst, wobei in den weiteren Patentansprüchen Merkmale aufgeführt sind, die die Lösung in vorteilhafter Weise weiterentwickeln.

Ein Verfahren zur Kartierung eventuell in einem Feld vorhandener Fremdkörper umfasst folgende Schritte:
Überfahren des Feldes mit einem Arbeitsgerät, das mindestens ein in den Boden des Feldes eindringendes und/oder auf dem Boden entlang laufendes Bodeneingriffsmittel umfasst,
Überwachen des Signals eines mit dem Bodeneingriffsmittel zusammenwirkenden Sensors daraufhin, ob das Bodeneingriffsmittel mit einem im Feld liegenden Fremdkörper interagiert,
Bestimmen der Position eines erfassten Fremdkörpers unter Verwendung eines Positionserfassu ngssystems,
und Abspeichern der erfassten Position des erfassten Fremdkörpers.

Mit anderen Worten wird ein Bodeneingriffsmittel beispielsweise eines Bodenbearbeitungsgeräts oder einer Sämaschine, das (z.B. als Tiefeneinstellrad) auf dem Boden des Feldes entlang läuft oder (z.B. als Federzinken oder Furchenöffner) in diesen eindringt, mittels eines Sensors daraufhin überwacht, ob es mechanisch mit einem Fremdkörper, insbesondere einem Stein, zusammengeprallt ist. Sollte das der Fall sein, wird die unter Verwendung von Positionsdaten eines Positionsbestimmungssystems bestimmte Position des Zusammenpralls in eine elektronische Karte eingetragen. Nach dem Auslösen durch den charakteristischen Sensorausschlag wird demnach die Koordinate detektiert und kann abgespeichert sowie direkt im Bedienerterminal der Maschine angezeigt werden. Anhand der Karte kann anschließend oder schon während des noch auf dem Feld laufenden Arbeitsvorgangs der Fremdkörper entfernt werden. Die gespeicherten Koordinaten der Hindernisse können über eine drahtlose Netzwerkverbindung direkt zur Auswertung an ein internetbasiertes Farm-Management-Portal oder einen beliebigen anderen Rechner zur weiteren Auswertung und Einsatzplanung gesendet werden. Über dieses Portal oder den Rechner ist es ebenfalls möglich, die Daten auf andere Maschinen zu übertragen. Somit kann ein Bediener einer (Ernte-) Maschine bei einem nachfolgenden Arbeitsvorgang darauf hingewiesen werden, dass er sich einem Objekt nähert, sodass er dem entsprechend schneller und direkter reagieren kann, falls er das Objekt aufnimmt, oder er kann manuell oder selbsttätig gelenkt um das Objekt herumfahren. Bevorzugte Geräte, an denen die Erfindung Verwendung finden kann, sind flach arbeitende passive Geräte. Darunter zählen Federzinkengrubber, Hacken, Striegel, Eggen, Scheibenegge, leichte Grubber und Sämaschinen. Ergänzend kann auch eine Erkennung von Steinen basierend auf bildgebenden Sensoren (Monokamera, Stereokamera) oder anderen optischen Sensoren realisiert werden oder eine Eingabemöglichkeit für den Bediener vorgesehen sein, um den Ort visuell erkannter Steine oder anderer Objekte eingeben zu können.

Die Erfindung dient der Prävention von durch Steine verursachten Maschinenschäden. Da der Landwirt weiß, an welchem Punkt sich Steine befinden, kann er diese direkt anfahren und entfernen. Die Möglichkeit, diese Aktion nach einem langen Zeitraum durchzuführen oder an Personal, auch Fremdpersonal, weiter zu geben, ist ihm hiermit auch gegeben. Auch ist der Einsatz von entsprechenden, autonomen oder manuell gesteuerten Maschinen zur Steinentfernung denkbar.

Der Sensor kann die Position des gegenüber dem Arbeitsgerät beweglich gelagerten Bodeneingriffsmittels relativ zum Arbeitsgerät erfassen. Eine Positionsänderung weist dann auf eine Interaktion mit einem Stein oder anderen Objekt bzw. Hindernis hin.

Das Bodeneingriffsmittel kann ein auf dem Boden des Feldes laufendes Rad umfassen, während der Sensor die vertikale Position des Rades erfasst und ein Fremdkörper anhand einer einen bestimmten Schwellenwert überschreitenden, vertikalen Beschleunigung oder Geschwindigkeit des Rades detektiert wird. Die Bodeneingriffsmittel können in einer weiteren Verfeinerung zwei seitlich benachbarte, auf dem Boden des Feldes laufende Räder umfassen, während jeweils ein Sensor die vertikale Position der Räder erfasst und die seitliche Position eines Fremdkörpers anhand der Positionen der Räder detektiert wird.

Das Bodeneingriffsmittel kann einen in den Boden eindringenden Zinken umfassen, der durch einen federnden Schaft mit dem Arbeitsgerät verbunden ist, wobei der Sensor die Position eines Bereiches des Schafts gegenüber dem Arbeitsgerät erfasst. Auch kann ein Furchenöffner als Bodeneingriffsmittel dienen.

Der Sensor kann in einer anderen Ausführungsform durch den Aufprall des Bodeneingriffsmittels gegen einen Fremdkörper im Bodeneingriffsmittel induzierte, mechanische Schwingungen erfassen. Ein derartiger Aufprall des Bodeneingriffsmittels erzeugt ein charakteristisches Geräusch, das mittels eines Mikrofons oder Vibrationsaufnehmers detektiert und durch eine Auswertungseinheit nachgewiesen werden kann, wie es an sich von Steindetektoren in Erntemaschinen her bekannt ist. Es ist auch denkbar, dass das Bodeneingriffsmittel durch eine Steinsicherung am Arbeitsgerät abgestützt ist und der Sensor ein Ansprechen der Steinsicherung erfasst.

Es kann auch ein Schritt des Übersendens der Signale des Sensors und/oder der erfassten Position des erfassten Fremdkörpers an eine beabstandete Stelle vorgesehen sein. Die Auswertung der Signale des Sensors muss demnach nicht an Bord des Arbeitsgeräts oder eines es ziehenden Fahrzeugs erfolgen, sondern kann an der beabstandeten Stelle vorgenommen werden, die sich beispielsweise auf einem landwirtschaftlichen Anwesen oder einem Rechenzentrum befinden kann. Demnach kann die Auswertung durch einen an einer beliebigen Stelle befindlichen Rechner erfolgen, dem die Signale über geeignete, drahtgebundene (Internet) oder drahtlose (Mobilfunknetz) Übertragungsmittel zugeführt werden. Der Landwirt kann dann von einem Stationär- oder Mobilgerät auf die Daten seines Feldes zugreifen.

Die Erfassung der Position des Arbeitsgeräts oder eines es ziehenden Fahrzeugs kann an einer Anbringungsposition einer Antenne des Positionsbestimmungssystems erfolgen, wobei eine Umrechnung und der Position der Antenne in die Position des Bodeneingriffsmittels zum Zeitpunkt der Erfassung der Interaktion des Bodeneingriffsmittels mit dem Fremdkörper vorgesehen ist. Diese Position wird schließlich abgespeichert.

Eine Vorrichtung zur Kartierung eventuell in einem Feld vorhandener Fremdkörper umfasst:
ein Arbeitsgerät, geeignet zum Überfahren des Feldes, das mindestens ein in den Boden des Feldes eindringendes und/oder auf dem Boden entlang laufendes Bodeneingriffsmittel umfasst,
einen mit dem Bodeneingriffsmittel zusammenwirkenden Sensor und damit verbundene Mittel zur Überwachen des Signals des Sensors daraufhin, ob das Bodeneingriffsmittel mit einem im Feld liegenden Fremdkörper interagiert,
ein Positionserfassungssystems zur Bestimmung der Position eines erfassten Fremdkörpers
und einen Speicher zur Abspeichern der bestimmten Position des erfassten Fremdkörpers.

### Ausführungsbeispiele

In den Zeichnungen sind zwei nachfolgend näher beschriebene Ausführungsbeispiele der Erfindung dargestellt. Es zeigt:
- Fig. 1: eine seitliche Ansicht eines Ackerschleppers mit einer Sämaschine,
- Fig. 2: eine vergrößerte Ansicht der Sämaschine,
- Fig. 3: eine Draufsicht auf den Ackerschlepper mit der Sämaschine,
- Fig. 4: ein Flussdiagramm zur Vorgehensweise der Steuerung der Figuren 1 bis 3, und
- Fig. 5: eine Ansicht eines Federzinkenschars mit einem Sensor.

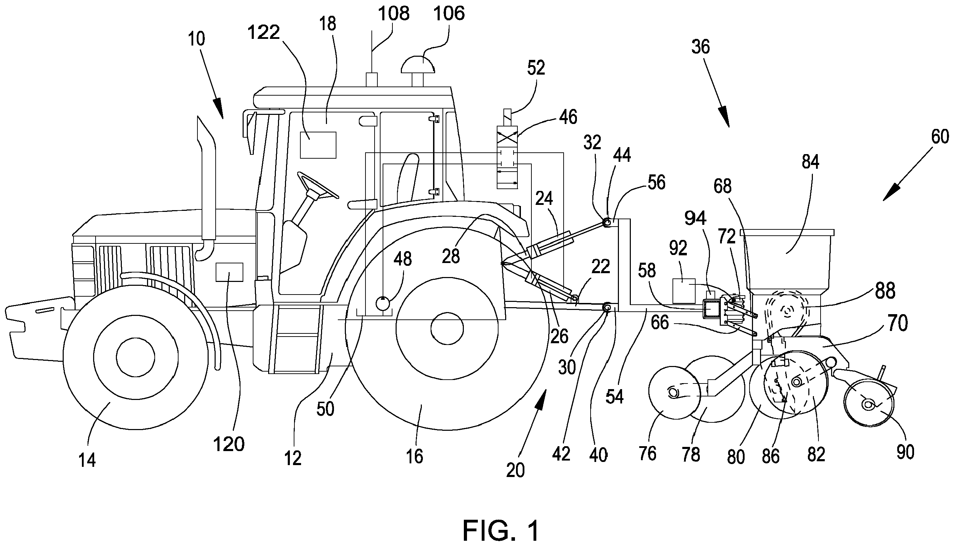

In der Figur 1 ist ein Ackerschlepper 10 dargestellt, der sich auf einem Fahrgestell 12 aufbaut und durch vordere, lenkbare Räder 14 und antreibbare, rückwärtige Räder 16 auf dem Boden abstützt. Ein Bedienerarbeitsplatz befindet sich in einer Kabine 18. Am rückwärtigen Ende des Fahrgestells 12 ist eine Dreipunktkupplung 20 angeordnet, die sich aus zwei nebeneinander angeordneten Unterlenkern 22 und einem darüber angebrachten Oberlenker 28 zusammensetzt. Die Unterlenker 22 sind durch zugehörige, doppelt wirkende Hydraulikzylinder 26 höhenverstellbar, welche die Unterlenker 22 um ihre Anlenkpunkte am Fahrgestell 12 um horizontale, etwa quer zur Vorwärtsrichtung orientierte Achsen verschwenken. Der Oberlenker 28 ist als Hydraulikzylinder 24 ausgeführt und demnach längenveränderbar. Durch Verstellung der Hydraulikzylinder 26 können rückwärtige Koppelpunkte 30 der Unterlenker 22 in eine zum Anbringen der Sämaschine 36 geeignete Position gebracht werden. Durch Verstellung der Länge des Oberlenkers 28, die anstelle durch den Hydraulikzylinder 24 auch rein mechanisch durch den Bediener von Hand mittels einer geeigneten Schraubspindel erfolgen könnte, kann ein rückwärtiger Koppelpunkt 32 des Oberlenkers 28 in eine zum Anbringen der Sämaschine 36 geeignete Position gebracht werden. Am rückwärtigen Ende der Unterlenker 22 sind in an sich bekannter Weise Unterlenker-Koppelpunkte 30 in Form von sich nach oben erstreckenden Fanghaken (oder beliebiger anderer Koppelpunkte, z. B. Koppelaugen, wie sie in der DIN ISO 730-1 Landmaschinen und Traktoren - Heck-Dreipunktanbau - Teil 1: Kategorien 1, 2, 3 und 4 beschrieben werden) angeordnet, während am rückwärtigen Ende des Oberlenkers 28 ein ebenfalls konventioneller Oberlenker-Koppelpunkt 32 vorgesehen ist.

Die doppelt wirkenden Hydraulikzylinder 26 der Unterlenker 22 sind mit einem Ventil 46 verbunden, das wiederum mit einem Vorratsbehälter 50 für Hydraulikfluid und einer vom Verbrennungsmotor des Ackerschleppers 10 angetriebenen Pumpe 48 gekoppelt ist. Das Ventil 46 kann mit beiden Hydraulikzylindern 26 verbunden sein oder jedem Hydraulikzylinder wird ein eigenes Ventil 46 zugeordnet. Das Ventil 46 ist in eine geschlossene Stellung verbringbar, wie dargestellt, und in eine Absenkstellung, wenn es in der Figur 1 nach oben hin verstellt wird, und in eine Hubstellung, wenn es in der Figur 1 nach unten hin verstellt wird. Das Ventil 46 kann manuell vom Bediener in der Kabine 18 oder durch geeignete elektromagnetische Aktoren 52 betätigt werden, die wiederum durch in der Kabine 18 angeordnete Schalter oder eine Vorgewendeautomatik (nicht gezeigt) betätigt werden. In der in Figur 1 gezeigten Stellung des Ventils 46 ist der Unterlenker 22 in sich blockiert und somit arretiert. Der Hydraulikzylinder 24 des Oberlenkers 28 dient nur zur einmaligen, anfänglichen Einstellung der Position des Koppelpunkts 32 und wird während des Feldbetriebs nicht verstellt, sondern ist dann (wie die Hydraulikzylinder 26 des Unterlenkers 22 in der Figur 1 anhand des Ventils 46 gezeigt) in sich blockiert. Am Feldende kann die Sämaschine 36 ausgehoben werden, indem das Ventil 46 durch den Bediener oder die Vorgewendeautomatik in die Hubstellung gebracht wird, und vor dem Bearbeiten der nächsten Spur analog wieder abgesenkt werden, indem das Ventil 46 durch den Bediener oder die Vorgewendeautomatik in die Absenkstellung gebracht wird. Dadurch werden die Unterlenker 22 durch die Hydraulikzylinder 26 angehoben und wieder abgesenkt, wodurch auch die Sämaschine 36 angehoben und abgesenkt wird.

Die Sämaschine 36 umfasst ein Haltegestell 54, das durch untere Laschen und Bolzen 42 an den Unterlenker-Kopplungspunkten 30 der Unterlenker 22 und durch ein oberes Halterungselement 56 und einen Bolzen 44 am Oberlenker-Koppelpunkt 32 befestigt ist. An dem Haltegestell 54 ist ein Querträger 58 befestigt, der sich über die ganze Breite der Sämaschine 36 erstreckt und an dem seitlich nebeneinander eine Anzahl von Säeinheiten 60 befestigt sind. Die Befestigung der Säeinheiten 60 am Querträger 58 erfolgt über U-förmige Halterungen 62, die mit einer Konsole 64 verbunden sind, die sich vertikal an der Rückseite des Querträgers 58 erstreckt und an der übereinander zwei Lenker 66, 68 angelenkt sind, die außerdem jeweils an einem Gestell 70 der Säeinheit 60 angelenkt sind. Die Lenker 66, 68 bilden mit der Konsole 64 und dem Gestell 70 ein verstellbares Parallelogramm, das die Höhe des Gestells 70 über dem Boden definiert. Ein als Vorspannmittel dienender pneumatischer Aktor 72, der in der dargestellten Ausführungsform als pneumatischer Balgzylinder ausgeführt ist, greift einerseits oben an der Konsole 64 und andererseits unten am unteren Lenker 66 (am Punkt 74) an und definiert die Position des Gestells 70 und die Andruckkraft, mit der am Gestell 70 abgestützte Furchenöffner 78, 80 mit dem Erdboden zusammenwirken. Der Druck im pneumatischen Aktor 72 wird durch eine pneumatische Kontrolleinrichtung 92 vorgegeben, die einen Kompressor und ein Druckregelventil umfassen kann. Anstelle des pneumatischen Aktors 72 könnte auch ein Hydraulikzylinder (nicht gezeigt) verwendet werden.

Das Gestell 70 trägt in an sich bekannter Weise einen Saatgutbehälter 84, ein Säschar 86 sowie eine (insbesondere pneumatische, mit von einem nicht gezeigten Gebläse bereitgestellten Unterdruck arbeitende) Zumesseinrichtung 88, die nach und nach einzelne Körner des Saatguts aus dem Saatgutbehälter 84 in das Säschar 86 abgibt, welches es in eine Furche ablegt, die durch den Furchenöffner 80 erzeugt wird, dessen Arbeitstiefe durch ein Tiefeneinstellrad 82 vorgegeben wird. Die Furche wird durch ein Schließrad 90 geschlossen. Eine weitere Furche kann durch einen Furchenöffner 78 erzeugt werden, dessen Arbeitstiefe durch ein Tiefeneinstellrad 76 vorgegeben wird. Diese weitere Furche kann zur Aufnahme von Düngemitteln durch ein weiteres, nicht gezeigtes Schar dienen und ebenfalls durch das Schließrad 90 geschlossen werden. Hinsichtlich weiterer Einzelheiten der Säeinheiten 60 wird auf die Offenbarung der EP 2 517 545 A1 verwiesen, deren Offenbarung durch Verweis mit in die vorliegenden Unterlagen aufgenommen wird.

Die Andruckkraft des Furchenöffners 80 wird durch den pneumatischen Aktor 72 vorgegeben und könnte mittels der durch den Bediener aus der Kabine 18 über eine Schnittstelle (z.B. virtuelles Terminal 122) und eine Busleitung (nicht gezeigt) kontrollierbaren pneumatischen Kontrolleinrichtung 92 oder eine Automatik zur Anpassung an die jeweiligen Gegebenheiten auf dem Feld veränderbar sein. Der pneumatische Aktor 72 könnte auch durch eine Feder (nicht gezeigt) ersetzt oder ergänzt werden, die ihm parallel geschaltet wird.

Es ist anzumerken, dass noch weitere Modifikationen der Sämaschine 36 denkbar wären. So könnte der Querträger 58 sich aus mehreren Abschnitten zusammensetzen, was es ermöglicht, äußere Abschnitte mit daran angebrachten Säeinheiten 70 in eine nach oben und innen versetzte Außerbetriebsposition für eine Straßenfahrt zu verbringen. An der Vorderseite des Ackerschleppers 10 könnte ein Düngemittelbehälter angebracht werden, dessen Inhalt durch geeignete, an sich bekannte pneumatische Fördermittel sukzessive in die oben erwähnte, weitere Furche eingebracht wird. Auch könnte sich der Querträger 58 auf einem eigenen Fahrgestell abstützen, das an einer Deichsel (nicht gezeigt) hinter dem Ackerschlepper 10 auf Rädern gezogen wird. In diesem Fall erfolgt die Bereitstellung des (zur Erzeugung der Andruckkraft benötigten) Gewichts der Sämaschine 36 durch ihr Fahrgestell und die daran befestigten Elemente, wie z.B. einen Saatguttank.

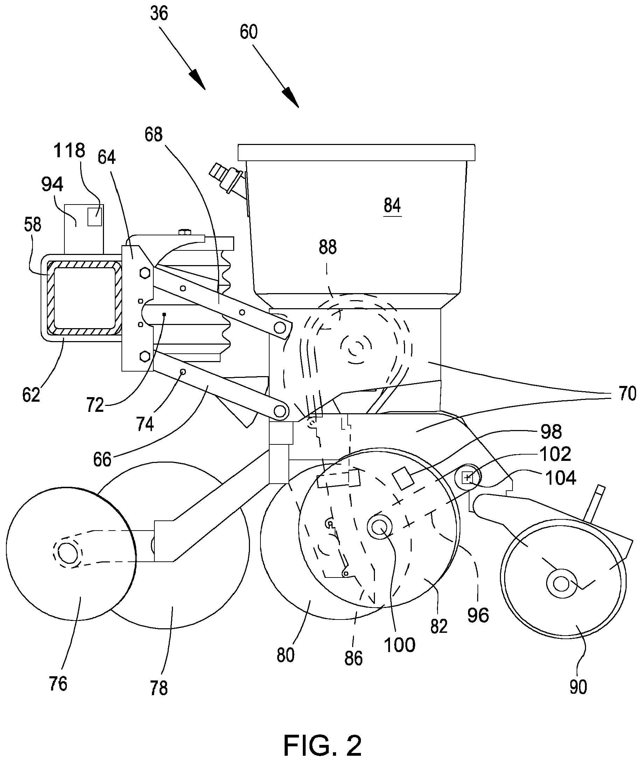

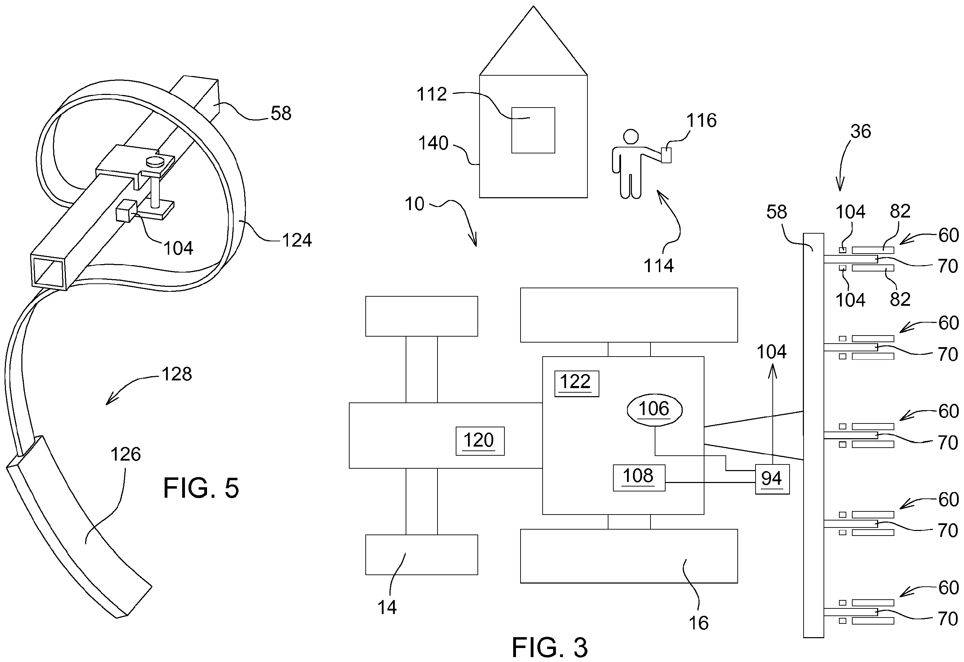

Wie in der Figur 2 dargestellt, ist das Tiefeneinstellrad 82 an einer Schwinge 96 um eine sich horizontal und quer erstreckende Drehachse 100 frei drehbar gelagert. Die Schwinge 96 ist ihrerseits um eine sich horizontal und quer erstreckende Drehachse 102 frei drehbar am Gestell 70 gelagert. Der Schwenkweg der Schwinge 96 nach oben wird durch einen Anschlag 98 definiert, der fest oder von Hand oder mittels eines Aktors (nicht gezeigt, vgl. aber die US-Patentanmeldung 15/783264 vom 13.10.2017, deren Offenbarung durch Verweis mit in die vorliegenden Unterlagen aufgenommen wird) höhenverstellbar sein kann. Anhand der Figur 3 ist erkennbar, dass jede Reiheneinheit 70 zwei Tiefeneinstellräder 80 umfasst, die beidseits des Gestells 70 angeordnet sind. Der Drehwinkel der Schwinge 96 um die Drehachse 102 wird mittels eines Sensors 104 erfasst, bei dem es sich um ein Potentiometer handeln kann oder es wird die Sensorik gemäß der US 15/783264 vom 13.10.2017 verwendet, d.h. es wird ein induktiver Abstandssensor verwendet, welcher den Abstand zu einer Zielfläche misst. Diese Zielfläche ist derart ausgestaltet, dass sich der Abstand zwischen der mit der Schwinge 96 gekoppelten Zielfläche und dem Sensor linear oder annähernd linear mit dem Winkel der Schwinge 96 relativ zum Rahmen 70 ändert.

Der Sensor 104 ist mit einer Steuerung 94 verbunden, die ihrerseits über ein Bussystem, das auch mit einer Steuerung 120 des Ackerschleppers 10 und einem in dessen Kabine 18 angeordneten, virtuellen Terminal 122 verbunden ist, mit einer an Bord des Ackerschleppers 10 angeordneten Positionsbestimmungseinrichtung 106 und einer ebenfalls an Bord des Ackerschleppers 10 angeordneten Sendeeinrichtung 108 verbunden ist, die Daten an einen Rechner 112 an einer beabstandeten Stelle 110 und/oder ein Handgerät 116 eines Verwalters 114 übersenden kann. Die Steuerung 94 kann auch die Kontrolleinheit 92 der Aktoren 72 kontrollieren, obwohl es denkbar wäre, der im Folgenden beschriebenen Aufgabe eine separat Steuerung 94 zuzuordnen, die nicht zur Kontrolle von Aktoren der Sämaschine 36 dient. Auch könnte die Steuerung 120 des Ackerschleppers 18 oder eine auf dem virtuellen Terminal 122 laufende Software oder ein mit dem Bussystem verbundenes Handgerät (Smartphone o.ä.) die Aufgaben der Steuerung 94 übernehmen.

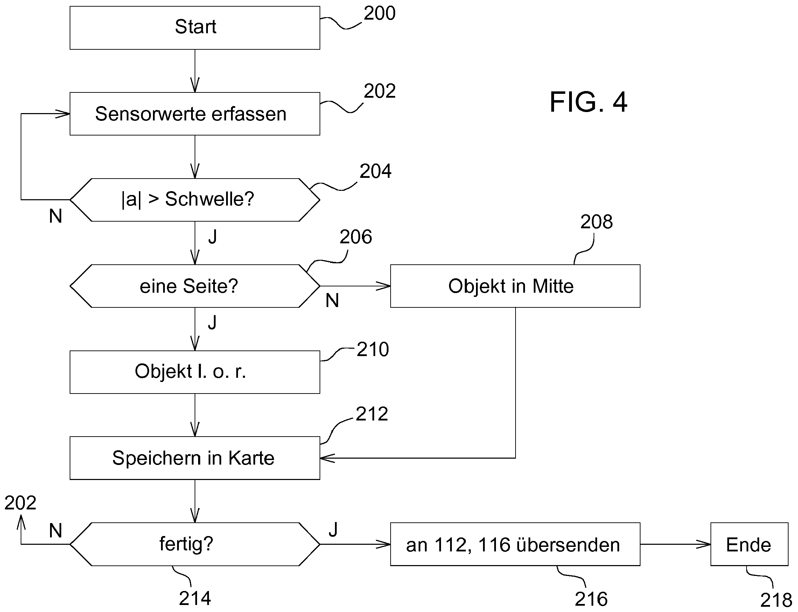

Die Figur 4 zeigt ein Flussdiagramm, nach welchem die Steuerung 94 im Betrieb arbeitet. Nach dem Start im Schritt 200 folgt der Schritt 202, in welchem die Signale der Sensoren 104 der Sämaschine 36 der Steuerung 94 zugeführt werden.

Im Schritt 204 wird geprüft, ob der Betrag der Beschleunigung oder Geschwindigkeit eines Tiefeneinstellrades 82 (d.h. die zweite oder erste Zeitableitung des Signals des Sensors 104) oberhalb eines Schwellenwerts liegt. Da das jeweilige Tiefeneinstellrad 82 nach unten ausweicht, wenn es eine Senke durchfährt, das Gestell 70 aber in derselben Höhe verbleibt, kann davon ausgegangen werden, dass bei langsamen Absinken oder Anheben des Tiefeneinstellrades 82 eine normale Bodensenke vorliegt, während bei schnellerem Absinken oder Anheben des Tiefeneinstellrades 82 ein Stein überfahren wird.

Falls der Schritt 204 ergibt, dass der Betrag der Beschleunigung eines Tiefeneinstellrades 82 nicht oberhalb des Schwellenwerts liegt, folgt wieder der Schritt 202. Anderenfalls folgt der Schritt 206, in dem geprüft wird, ob der Schwellenwert auf der anderen Seite des Gestells 70 der Säeinheit 60 ebenfalls überschritten wurde. Ist das nicht der Fall, folgt der Schritt 210, in dem festgestellt wird, dass ein Stein nur auf der Seite des Gestells 70 vorliegt, an der der Schwellenwert überschritten wurde, während anderenfalls der Schritt 208 folgt, in dem festgestellt wird, dass ein Stein auf beiden Seiten des Gestells 70 vorliegt.

Der hier beschriebene Algorithmus geht demnach von insgesamt fünf Möglichkeiten aus, wie sich die Tiefeneinstellräder 82 und somit die Werte der Sensoren 104 verhalten können.

Die erste Möglichkeit liegt darin, dass die Messkurven keine Ausschläge haben. Dies bedeutet, dass das System ruhig arbeitet und keine Ereignisse detektiert werden.

Die zweite Möglichkeit ist, dass beide Messwerte gehen entgegengesetzt auseinander oder zueinander über einen langen Zeitraum (d.h. mit unter dem Schwellenwert liegender Beschleunigung oder Geschwindigkeit). Hier wird eine Senke oder ein Hügel auf einer Seite der Säeinheit 60 erkannt. Hier ist kein Detektieren eines Steines nötig. Es sei noch angemerkt, dass ein Ausschlag des Sensorwerts nach unten einem Anheben des entsprechenden Tiefeneinstellrads 82 entspricht.

Die dritte Möglichkeit ist, dass die Sensorwerte entgegengesetzt auseinander gehen. Dies zeigt an, dass sich das linke Tiefeneinstellrad 82 hebt und das rechte Tiefeneinstellrad 82, durch die Funktion der Aufhängung der Säeinheit 60 am Querträger 58 durch den Aktor 72, senkt. Das unerwünschte Objekt ist somit am linken Tiefeneinstellrad 82. Die Positionskoordinate des linken Tiefeneinstellrad 82 wird zu dem Zeitpunkt detektiert und gespeichert.

Die vierte Möglichkeit ist, dass die Sensorwerte entgegengesetzt zueinander gehen. Dies zeigt an, dass sich das rechte Tiefeneinstellrad 82 hebt und das linke Tiefeneinstellrad 82, durch die Funktion der Aufhängung der Säeinheit 60 am Querträger 58 durch den Aktor 72, senkt. Das unerwünschte Objekt ist somit am rechten Tiefeneinstellrad 82. Die Positionskoordinate des rechten Tiefeneinstellrades 82 wird zu dem Zeitpunkt detektiert und gespeichert.

Die fünfte Möglichkeit ist, dass die Sensorwerte in dieselbe Richtung verlaufen. Das zeigt an, dass sich die gesamte Säeinheit 60 hebt. Das Objekt ist damit am Furchenöffner 80. Die Positionskoordinate des Furchenöffners 80 (Längengrad, Breitengrad und nach Bedarf Höhe) wird zu dem Zeitpunkt erfasst und gespeichert.

Auf beide Schritte 210 und 208 folgt der Schritt 212, in der die Position des Objekts (Steins) in einer Karte in einem Speicher 118 der Steuerung 94 abgelegt wird. Dazu werden die Daten des Positionsbestimmungssystems 106 genutzt, das Signale von Satelliten eines GNSS (z.B. GPS, Galileo und/oder Glonass) empfängt und daraus die Position seiner Antenne ableitet, die anhand der Steuerung 94 bekannter, mechanischer Abmessungen (horizontaler und vertikaler Versätze zwischen dem Positionsbestimmungssystem 106 und den jeweiligen Tiefeneinstellrädern 82) und anhand der Fahrtrichtung und ggf. der (bei Deichsellenkung variablen) Orientierung der Sämaschine 36 gegenüber dem Ackerschlepper 10 durch die Steuerung 94 in die Position des Steins (in zwei- oder dreidimensionalen Koordinaten) gemäß Schritt 210 oder 208 umgerechnet wird, wozu auf die Offenbarung der EP 0 970 595 A1 verwiesen sei.

Auf den Schritt 212 folgt der Schritt 214, in dem abgefragt wird, ob das Feld vollständig bearbeitet wurde. Ist das nicht der Fall, folgt wieder der Schritt 202 und anderenfalls der Schritt 216, an dem die im Speicher 118 abgelegte Karte der Steine des Feldes an den Rechner 112 und/oder das Handgerät 116 übertragen wird. Daraufhin wird der Vorgang im Schritt 218 beendet. Der Verwalter 114 kann somit das Entfernen der Steine vom Feld veranlassen.

In der Ausführungsform nach Figur 5 ist ein Federzinkenschar 128 mit einem Sensor 104 ausgestattet. Der an einem Querträger 58 angebrachte Sensor 104 misst den Abstand zum Schaft 124 des Federzinkenschares 128, denn je nach Krafteinwirkung an der Scharspitze 126 wird sich der Radius des Schaftes 124 ändern. Eine abrupte Signaländerung des Sensors 104 deutet auf ein Objekt (Stein) hin. In diesem Moment wird die Positionskoordinate der im Bodeneingriff befindlichen Scharspitze 126 durch eine Steuerung 94 (in der oben beschriebenen Weise) detektiert und gemäß der vorherigen Ausführungsform kartiert.

Das in der Figur 5 gezeigte Federzinkenschar 128 kann zwischen seitlich benachbarten Säeinheiten 60 der Ausführungsform nach den Figuren 1 bis 4 angebracht werden, um (in Verbindung mit möglichst breiten Tiefeneinstellrädern 82) in Querrichtung das Feld möglichst lückenlos auf Steine zu überwachen.

Sollten bei der Sämaschine 36 hingegen nennenswerte seitliche Lücken zwischen auf Steine sensierten Bereichen auf dem Feld verbleiben, kann dieselbe oder eine andere den Boden bearbeitende Maschine diese Bereiche in einem nachfolgenden Arbeitsgang abdecken. So kann beim Unkrauthacken der von der Sämaschine 36 der Figuren 1 bis 4 bisher nicht bearbeitete Bereich zwischen den Säeinheiten 60 durch eine mit Federzinkenscharen der Figur 5 ausgestattete Maschine bearbeitet werden.

Denkbar sind zur Steinerfassung auch mit beliebigen Bodeneingriffsmitteln zusammenarbeitende Systeme mit Beschleunigungssensoren, Wegaufnehmern und Dehnmessstreifen. Auch diese Messsignale würden mit einem Objekterkennungsalgorithmus analog wie in Figur 4 dargestellt arbeiten, um Steine zu detektieren. Bei Geräten mit FederDämpfer-Elementen (Tiefenmeißel, schwerer Grubber) können auch die Strömungen von Flüssigkeiten zur Detektion von Objekten verwendet werden. Einige Bodenbearbeitungsgeräte und Sämaschinen besitzen sogenannte Steinsicherungen. Das Sensieren der Auslösung dieser Steinsicherungen kann Ausschluss über die Position des ungewünschten Objektes geben.

Zur Steinerkennung ist zusätzlich auch ein Einsatz von Stereokameras und Monokameras denkbar. Diese können implementiert werde, dass offenliegende Steine schon vor dem Überfahren dieser erkannt und aus dem Weg geräumt werden können.

Neben der beschriebenen automatischen Erkennung der Steine können auch zwei manuelle Funktionen vorgesehen sein, um die Kartierungen der Objekte zu generieren.

Die erste manuelle Funktion sieht vor, das nach einer spürbaren Erschütterung des Maschinengespannes, nach dem Entfernen eines Fremdkörpers aus dem Arbeitsgerät oder nach einer Sichtanalyse (z.B. das Auslösen einer Steinsicherung am Pflug) ein Ikon im Maschinendisplay (auf dem virtuellen Terminal 122) bedient werden kann, welcher ein Abspeichern der aktuellen Maschinenposition veranlasst. Das Verfahren dient dann der Eingrenzung des Suchbereiches nach Steinen.

Die zweite manuelle Funktion sieht vor, nach Sichtkontakt mit einem Hindernis, auf einer digitalen Karte nach einer Abschätzung der Position auf der Karte, mittels Displayberührung (auf dem virtuellen Terminal 122) eine Markierung für das Objekt zu setzen.

Es ist auch möglich, die Funktionen zu kombinieren, sodass sowohl automatische Markierungen erstellt werden als auch manuelle gesetzt werden können.

Somit kann das System auf allen Geräten Verwendung finden, unabhängig davon, ob das Arbeitsgerät mit einem Sensorsystem ausgestattet ist. Gleichzeitig können auch andere Fremdkörper als Steine, wie Anhäufungen von Ernterückständen oder auf dem Feld abgelegte Gegenstände markiert werden.

Es können unterschiedliche Symbole für automatische und manuell gesetzte Markierungen verwendet werden. Manuell gesetzten Markierungen kann zusätzlich eine Funktion zur Kommentarabgabe gegeben werden. Beispielsweise können automatisch gesetzte Hindernisse durch fahnenähnliche Symbole dargestellt werden, während die manuell gesetzten Markierungen durch halbkreisförmige Symbole repräsentiert werden.

Die gespeicherten Koordinatenpunkte können anschließend auf der die Daten sammelnden Maschine oder an einer beabstandeten Stelle verarbeitet werden. So können sie auf einer Karte angezeigt und/oder verarbeitet werden, um mittels eines Geräts die kartierten Punkte anzulaufen, um das Objekt zu finden und zu entfernen. Mithilfe eines Internet-basierten Portals können die Punkte gespeichert und auf andere Maschinen übertragen werden. Dort können die gespeicherten Datenpunkte auf dem Maschinen-Display (d.h. auf einem virtuellen Terminal 122 der anderen Maschine) angezeigt werden. Der Maschinenbediener wird so frühzeitig auf Gefahrenstellen hingewiesen und kann schneller reagieren. Die Erfindung ermöglicht somit eine Warnung vor Fremdobjekten wie Steinen auch in Beständen die so dicht gewachsen sind, dass z.B. der Fahrer einer Erntemaschine den Boden nicht mehr erblicken kann.

Unter Verwendung der manuellen oder automatischen Markierung in einer Karte können ebenfalls Fremdkörper, welche von Erntemaschinen aufgenommen wurden, nach Entfernung dieser, exakt im System hinterlegt werden. In der Maisernte kann es gerade in der Nähe von Straßen, Alleen und Weiden vorkommen, dass Holzpfeiler, Äste und Markierungspfeiler und auch Steine, welche vom Metalldetektor nicht erkannt werden, aufgenommen werden und die Überlastsicherung der Maschine auslösen. Diese müssen dann per Hand entfernt werden. Der Fahrer kann das Objekt beispielsweise an der "rechten Schneidwerksbreite" ablegen und diesen Punkt im Maschinendisplay konfigurieren und den Markierauslöser betätigen. Das Objekt kann vor dem nächsten Bearbeitungsschritt entfernt werden.

### Schritte der Figur 4:

200 Start
202 Sensorwerte erfassen
204 |a| > Schwelle?
206 eine Seite?
208 Objekt in Mitte
210 Objekt I. o. r.
212 Speichern in Karte
214 fertig?
216 an 112, 116 übersenden
218 Ende

## Patentansprüche

1. Verfahren zur Kartierung eventuell in einem Feld vorhandener Fremdkörper, mit folgenden Schritten:
Überfahren des Feldes mit einem Arbeitsgerät, das mindestens ein in den Boden des Feldes eindringendes und/oder auf dem Boden entlang laufendes Bodeneingriffsmittel umfasst,
Überwachen des Signals eines mit dem Bodeneingriffsmittel zusammenwirkenden Sensors (104) daraufhin, ob das Bodeneingriffsmittel mit einem im Feld liegenden Fremdkörper interagiert,
Bestimmen der Position eines erfassten Fremdkörpers unter Verwendung eines Positionserfassungssystems (106),
und Abspeichern der bestimmten Position des erfassten Fremdkörpers.

2. Verfahren nach Anspruch 1, wobei der Sensor (104) die Position des gegenüber dem Arbeitsgerät beweglich gelagerten Bodeneingriffsmittels gegenüber dem Arbeitsgerät erfasst.

3. Verfahren nach Anspruch 2, wobei das Bodeneingriffsmittels ein auf dem Boden des Feldes laufendes Rad (82) umfasst, der Sensor (104) die vertikale Position des Rades (82) erfasst und ein Fremdkörper anhand einer einen bestimmten Schwellenwert überschreitenden, vertikalen Beschleunigung oder Geschwindigkeit des Rades (82) detektiert wird.

4. Verfahren nach Anspruch 3, wobei das Bodeneingriffsmittels zwei seitlich benachbarte, auf dem Boden des Feldes laufende Räder (82) umfasst, jeweils ein Sensor (104) die vertikale Position eines der Räder (82) erfasst und die seitliche Position eines Fremdkörpers anhand der Positionen der Räder (82) detektiert wird.

5. Verfahren nach Anspruch 2, wobei das Bodeneingriffsmittel einen in den Boden eindringenden Zinken (126) umfasst, der durch einen federnden Schaft (124) mit dem Arbeitsgerät verbunden ist und der Sensor (104) die Position eines Bereiches des Schafts (124) gegenüber dem Arbeitsgerät erfasst.

6. Verfahren nach Anspruch 1, wobei der Sensor durch den Aufprall des Bodeneingriffsmittels gegen einen Fremdkörper im Bodeneingriffsmittel induzierte, mechanische Schwingungen erfasst.

7. Verfahren nach Anspruch 2, wobei das Bodeneingriffsmittel durch eine Steinsicherung am Arbeitsgerät abgestützt ist und der Sensor ein Ansprechen der Steinsicherung erfasst.

8. Verfahren nach einem der vorhergehenden Ansprüche, mit dem Schritt des Übersendens der Signale des Sensors (104) und/oder der erfassten Position des erfassten Fremdkörpers an eine beabstandete Stelle.

9. Verfahren nach einem der vorhergehenden Ansprüche, mit dem Schritt der Erfassung der Position des Arbeitsgeräts oder eines es ziehenden Fahrzeugs (10) an einer Anbringungsposition einer Antenne des Positionsbestimmungssystems (106) und der Umrechnung und Abspeicherung der Position der Antenne in die Position des Bodeneingriffsmittels zum Zeitpunkt der Erfassung der Interaktion des Bodeneingriffsmittels mit dem Fremdkörper.

10. Vorrichtung zur Kartierung eventuell in einem Feld vorhandener Fremdkörper, umfassend:
ein Arbeitsgerät, geeignet zum Überfahren des Feldes, das mindestens ein in den Boden des Feldes eindringendes und/oder auf dem Boden entlang laufendes Bodeneingriffsmittel umfasst,
einen mit dem Bodeneingriffsmittel zusammenwirkenden Sensor (104) und damit verbundene Mittel zur Überwachen des Signals des Sensors daraufhin, ob das Bodeneingriffsmittel mit einem im Feld liegenden Fremdkörper interagiert,
einem Positionserfassungssystems (106) zur Bestimmung der Position eines erfassten Fremdkörpers
und einen Speicher (118) zur Abspeichern der bestimmten Position des erfassten Fremdkörpers.
